# EUROPÄISCHE PATENTSCHRIFT

(11) **EP 2 742 798 B1**
(45) Veröffentlichungstag und Bekanntmachung des Hinweises auf die Patenterteilung: **22.11.2017**
(21) Anmeldenummer: 13196212.8
(22) Anmeldetag: 09.12.2013
(51) Int. Cl.: A01K 1/015

(54) **Verfahren zur Herstellung von Böden für Tierstallungen sowie Boden für Tierstallungen**
Method for the manufacture of floors for animal stables and floor for animal stables
Procédé de fabrication de sols pour étables et sol pour étables

(30) Priorität: 12.12.2012 DE 102012112175
(43) Veröffentlichungstag der Anmeldung: 18.06.2014
(73) Patentinhaber: Aunkofer, Franz, 93326 Abensberg (DE)
(72) Erfinder: Aunkofer, Franz, 93326 Abensberg (DE)
(74) Vertreter: Benninger, Johannes

(56) Entgegenhaltungen:
- CH-A- 217 998
- CH-A- 293 026
- DE-C- 939 415
- US-A- 4 183 324

## Beschreibung

Die vorliegende Erfindung betrifft ein Verfahren zur Herstellung von Böden für Tierstallungen mit den Merkmalen des unabhängigen Anspruchs 1 sowie einen Boden für Tierstallungen mit den Merkmalen des unabhängigen Anspruchs 8.

Aus dem Stand der Technik sind bereits Böden für Tierstallungen bekannt, welche bspw. aus Beton gebildet sein können. Wird ein derartiger Boden für Tierstallungen gefertigt, so besitzt er nach der Fertigung eine Oberflächenrauigkeit, über welche Tiere Halt auf dem Stallboden bzw. auf dem Beton finden können.

Da die Oberflächenrauigkeit des Betons bzw. des Stallboden durch Verschleiß, durch vielfaches Aufschieben von Verschmutzungen und Urinstein in der Praxis schnell abgetragen wird, wodurch auch die Griffigkeit nachlässt, besitzen Tierstallböden häufig zusätzliche Fugen bzw. Strukturierungen, über welche die Tiere zusätzlichen Halt finden. Ein derartiger Tierstallboden ist bspw. aus der DE 10 06 657 B bekannt. Die Fertigungsverfahren für einen derartigen Tierstallboden sind jedoch aufwändig und zeitintensiv. Zudem kommt es bei Tierstallböden mit derartigen Fugen häufig zu einer Verletzung im Bereich der Klauen von Tieren, da die Fugen aus Beton eine harte Oberfläche aufweisen.

Aus der DE 939 415 B ist ein weiterer Stallboden für Nutzvieh bekannt. Der dort offenbarte Stallboden ist hierbei durch mehrere Platten gebildet, die jeweils auf ihren dem Nutzvieh zugewandten Seiten mehrere parallel zueinander orientierte Riefen besitzen. Zur Herstellung des Bodens werden die Platten angefeuchtet und in den Mörtelbereich so beabstandet zueinander verlegt, dass zwischen den Platten Fugen entstehen. Die Fugen werden anschließend mit Zementmörtel ausgegossen.

Die DE 293 026 A offenbart ein Verfahren zur Herstellung eines Stallbodenbelags für Nutzvieh sowie einen nach diesem Verfahren hergestellten Stallbodenbelag. Einzelne Platten werden auf einem aus Schlackenbeton bestehenden Untergrund verlegt, so dass Stoßfugen entstehen. Der Mörtelbrei kann bis mindestens zur halben Plattendicke ansteigen. Nach Anbinden des Betonmörtels wird die Resthöhe der Stoßfugen mit einer Bitumenklebmasse ausgegossen.

Die CH 217 998 A offenbart einen Stallboden, welcher eine ortsfeste Unterlage aus Zement oder Beton und eine darüber liegende, an der Viehstandstelle angeordnete Deckauflage besitzt. Die Deckauflage kann aus streifenförmigen, nebeneinanderliegenden, paarweise schwach gegeneinander und gegen eine Flüssigkeitsablaufrinne der Unterlage geneigten Elementen bestehen. Die Elemente umfassen an ihrer Unterseite Längsrippen, mittels welcher sie in je einer in der Unterlage vorgesehenen Rinne eingreifen.

Die US 4 183 324 A offenbart ein Verfahren und eine Form zur Herstellung einstückiger Betonplatten. Diese Betonplatten sollen sich insbesondere als Boden für Tierstallungen eignen. Die Betonplatten besitzen Fugen, in welche Vorsprünge von Auflagen aus Holz eingesetzt werden können. Weiter ist eine Form offenbart, mittels welcher die Betonplatten sowie ihre Fugen gebildet werden können.

Der bekannte Stand der Technik offenbart kein Verfahren, bei welchem durch das Einsetzen von Formatteilen Fugen im Zement gebildet werden, in denen Formatteile aus organischem Material angeordnet sein können. Auch offenbart der bekannte Stand der Technik keinen Boden, der Fugen mit darin angeordneten Formatteilen aus organischem Material aufweist.

Das vorrangige Ziel der Erfindung besteht daher in der Schaffung eines Verfahrens zur Herstellung von trittsicheren und verletzungsreduzierenden Böden für Tierstallungen, das auf einfache und unkomplizierte Art und Weise umgesetzt werden kann. Weiteres Ziel der Erfindung ist es, einen Boden für Tierstallungen zur Verfügung zu stellen, welcher einen sicheren Tritt für die Tiere gewährleistet und weiter die Verletzungsgefahr im Bereich der Klauen von Tieren bei Kontakt mit dem Boden reduziert.

Diese Ziele der Erfindung werden durch ein Verfahren mit den Merkmalen im Patentanspruch 1 sowie durch einen Boden für Tierstallungen mit den Merkmalen im Patentanspruch 8 erreicht. Weitere vorteilhafte Ausführungsformen werden durch die Unteransprüche beschrieben.

Das erfindungsgemäße Verfahren ist vorgesehen zur Herstellung von Böden für Tierstallungen. Bspw. kann das Verfahren vorgesehen sein zur Herstellung von Böden für Kuhställe, Schweineställe oder dergleichen.

In einem ersten Schritt wird im Rahmen des erfindungsgemäßen Verfahrens auf eine definierte Fläche eine Schicht aus flüssigem Zement aufgebracht. Bspw. kann der flüssige Zement bzw. der mit Flüssigkeit versehene Zement zusammen mit weiteren Bestandteilen, wie Gesteinskörnungen und/oder Zusatzmitteln auf die definierte Fläche aufgebracht werden. Der flüssige Zement kann somit zusammen mit den weiteren Bestandteilen bspw. als Beton und/oder Mörtel ausgebildet sein.

Die definierte Fläche ist bevorzugt diejenige Fläche, über welche sich der Boden für die Tierstallung erstrecken soll. Bspw. kann die definierte Fläche einen quadratischen oder rechteckigen Grundriss aufweisen. Darüber hinaus sind weitere Ausgestaltungen, bspw. mit rundem Grundriss vorstellbar, die der angesprochene Fachmann in Abhängigkeit der gewünschten Formgebung des Bodens für die Tierstallung vorsehen kann.

In weiteren Ausführungsformen kann die definierte Fläche nicht als diejenige Fläche ausgebildet sein, über welche sich der Boden für die Tierstallung erstrecken soll. Bspw. kann der aus dem Verfahren resultierende Boden für Tierstallungen vorhergehend und vorzugsweise als Fertigteil bzw. Formatteil hergestellt werden und in einem weiteren Schritt in der jeweiligen Tierstallung installiert werden. Ist dies der Fall, so können mehrerer Fertigteile bzw. Formatteile später in der Tierstallung installiert werden und nachfolgend den kompletten Boden für die jeweilige Tierstallung ausbilden.

Dem Aufbringen des flüssigen Zementes auf die definierte Fläche nachfolgend werden ein oder mehrere Formatteile aus verdichtetem organischem Material in den Zement während seines plastischen Zustandes eingesetzt. Bspw. kann das Einsetzen der ein oder mehreren Formatteile unmittelbar nach dem Aufbringen von flüssigem Zement auf die definierte Fläche und/oder nach einem nachfolgendem Ausrichten oder Behandeln des Zementes stattfinden. Es ist hierbei vorstellbar, dass die ein oder mehreren Formatteile jeweils manuell (händisch) in den Zement während seines plastischen Zustandes eingesetzt werden. Da der Zement während seines plastischen Zustandes verformbar ist, können mittels eines Einsetzens der Formatteile und einer hieraus resultierenden Verformung des Zementes Fugen im Zement ausgebildet werden. Die ein oder mehreren Formatteile können durch den Zement während seines plastischen Zustandes aufgenommen werden. Weiter können die Formatteile während und nach dem Aushärten des Zementes im Zement verbleiben und somit als Bestandteil des Bodens ausgebildet sein. Durch das Einsetzen werden Fugen im Zement gebildet, in denen das organische Material bzw. die ein oder mehreren Formatteile angeordnet sind.

Das Verdichten des organischen Materials zu Formatteilen kann in einem vorhergehenden Verfahrensschritt erfolgen. Bevorzugt kann das Verdichten maschinell erfolgen, wobei organisches Material zu Formatteilen verpresst wird. Während des Verdichtens oder vor dem Verdichten kann das organische Material mit ein oder mehreren weiteren Zusatzstoffen und/oder ein oder mehreren weiteren Zusatzmitteln imprägniert werden. Bspw. kann das organische Material mit Kunstharz imprägniert werden. Die Formatteile können somit durch Kunstharzpressholz ausgebildet sein, wie es bspw. unter dem Handelsnamen "Werzalit" bekannt ist.

In einem weiteren Verfahrensschritt erfolgt das Aushärten des Zementes, wobei die ein oder mehreren Formatteile während des Aushärtens und nach dem Aushärten als erkennbarer Bestandteil des Bodens im Zement verbleiben. Ebenso kann der Zement weiterhin einen erkennbaren Bestandteil des Bodens ausbilden. In besonders bevorzugten Ausführungsformen ist eine Bodenoberfläche bzw. eine Trittfläche für die jeweiligen Tiere anteilig durch Zement und anteilig durch organisches Material ausgebildet. Die Formatteile können zusammen mit der zumindest teilweise aus Zement gebildeten Basisschicht eine zumindest weitgehend ebene Trittfläche ausbilden. Das organische Material befindet sich hierbei in den Fugen, welche durch eine aus dem Einsetzen der ein oder mehreren Formatteile resultierende Verformung des Zementes im Zement ausgebildet werden. Die ein oder mehreren Formatteile sind somit zugänglich, so dass bei Betreten des Bodens ein Oberflächenkontakt mit den ein oder mehreren Formatteilen herstellbar ist. Aufgrund der Ausbildung der ein oder mehreren Formatteile über organisches Material im Boden und seiner Eigenschaft zu verrotten, werden die Rillen bzw. Fugen nur langsam freigegeben, was das Risiko einer Verletzung der Klauen von Tieren bei Kontakt mit dem Boden bzw. mit den ein oder mehreren Formatteilen stark und wenigstens temporär reduziert. In der Praxis hat sich gezeigt, dass nach mehrjährigem Betreten des Bodens durch Tiere das organische Material bzw. die Formatteile sukzessive aus dem ausgehärteten Zement bzw. aus dem Beton oder Mörtel entweichen. Hierbei bleiben jedoch im Bereich der Positionen, an welchen sich die Formatteile befanden, Fugen im ausgehärteten Zement zurück, so dass eine Trittsicherheit für die Tiere weiterhin gewährleistet bleibt. Durch das erfindungsgemäße Verfahren wird somit weiter eine Möglichkeit zur Fugenbildung in Böden zur Verfügung gestellt, bei welchem die Fugen auf einfache und unkomplizierte Art und Weise gebildet werden können.

In einer bevorzugten Ausführungsform kann es sein, dass der flüssige Zement nach dem Aufbringen auf die definierte Fläche und vor dem Einsetzen der ein oder mehreren Formatteile in einem weiteren Verfahrensschritt derart ausgerichtet oder behandelt wird, dass er eine ebene Oberfläche ausbildet. Bspw. kann vorgesehen sein, dass die ebene Oberfläche zumindest annäherungsweise horizontal orientiert ist. Zum Ausrichten oder Behandeln können ein oder mehrere Schiebe- oder Abzugseinrichtungen vorhanden sein, die zum Ausrichten bzw. Behandeln des flüssigen Zementes unter Oberflächenkontakt mit dem flüssigen Zement über den flüssigen Zement bewegt werden. Bspw. können die Schiebe- oder Abzugseinrichtungen über einen Handgriff oder Haltebereich verfügen, so dass sie händisch über den flüssigen Zement bewegt werden können. Die Erfindung ist jedoch nicht auf derartige Ausführungsformen beschränkt, so dass darüber hinaus beispielsweise vorstellbar ist, dass das Ausrichten oder Behandeln des flüssigen Zementes maschinell und ggf. automatisiert erfolgt.

Auch kann es sein, dass wenigstens zwei separate Formatteile vorhanden sind, welche vorzugsweise nacheinander in den Zement während seines plastischen Zustandes eingesetzt werden. Die zwei separaten Formatteile können bspw. eine identische Formgebung besitzen. Ebenso kann das Einsetzen der wenigstens zwei separaten Formatteile nacheinander händisch erfolgen. Sämtliche der wenigstens zwei separaten Formatteile können, wie bereits beschrieben, in einem vorhergehenden Verfahrensschritt durch Verdichten von organischem Material, vorzugsweise maschinell, hergestellt werden.

Zudem kann in einer bevorzugten Ausführungsform der vorliegenden Erfindung vorgesehen sein, dass die wenigstens zwei separaten Formatteile jeweils eine gitter- und/oder netzartige Formgebung besitzen und derart benachbart in den Zement eingesetzt werden, dass nach Einsetzen der wenigstens zwei separaten Formatteile die wenigstens zwei separaten Formatteile miteinander eine durchgehende Strukturierung im Zement bilden. Beispielweise können die wenigstens zwei separaten Formatteile derart in den Zement eingesetzt werden, dass sie sich zumindest paarweise berühren bzw. zumindest paarweise miteinander in Oberflächenkontakt gebracht sind.

In besonders bevorzugten Ausführungsformen werden jedoch, sofern es die Dimensionierung des jeweiligen Bodens erlaubt, eine Vielzahl von Formatteilen in den Zement während seines plastischen Zustandes eingesetzt und verbleiben während und nach dem Aushärten im Zement. Jeweils benachbarte Formatteile können hierbei miteinander in Anlage gebracht sein, so dass sämtliche Formatteile miteinander eine erkennbare netz- und/oder gitterartige Strukturierung im Boden ausbilden.

Je nach gewünschter Strukturierung via organisches Material im jeweiligen Boden ist eine Vielzahl von möglichen geometrischen Ausgestaltungen für die Formatteile vorstellbar. Wie vorhergehend bereits erwähnt, kann es sein, dass eine Trittfläche bzw. eine Oberfläche des Bodens anteilig durch organisches Material und anteilig durch Zement ausgebildet ist. Hierzu können die Formatteile derart ausgebildet sein, dass sie jeweils und/oder unter benachbarter Anlage einen Durchtritt für den Zement bereitstellen.

Denkbar ist darüber hinaus, dass die ein oder mehreren Formatteile derart in den Zement während seines plastischen Zustandes eingesetzt werden, dass sie sich nachfolgend zumindest weitgehend über die gesamte definierte Fläche erstrecken. Somit kann der gesamte Boden der Tierstallung mit einer Strukturierung versehen sein. Auch sind weitere Ausführungsformen vorstellbar, bei welchen die Strukturierung teilweise über den Verlauf des Bodens ausgebildet ist. Die ein oder mehreren Formatteile ausbilden jewels eine, vorzugsweise jedoch mehrere Öffnungen, durch welche nach Einsetzen der Formatteile in den Zement der Zement ein- oder hindurchtritt. Sind mehrere Öffnungen vorhanden, so können die jeweiligen Formatteile hierbei wiederum die vorhergehend erwähnte gitter- und/oder netzartige Struktur besitzen. Auch ist vorstellbar, dass wenigstens zwei Formatteile nach Einsetzen in den Zement miteinander zumindest eine Öffnung ausbilden, durch welche nach Einsetzen der Formatteile in den Zement der Zement ein- oder hindurchtritt.

Außerdem kann vorgesehen sein, dass nach Einsetzen der ein oder mehreren Formatteile in den Zement in einem weiteren Verfahrensschritt der flüssige Zement derart ausgerichtet oder behandelt wird, dass er zusammen mit den ein oder mehreren Formatteilen eine zumindest weitgehend ebene Oberfläche ausgebildet. Die ebene Oberfläche kann zumindest weitgehend horizontal orientiert sein. Das Ausrichten oder Behandeln kann auch hier über eine oder mehrere Schiebe- oder Abzugseinrichtung erfolgen, die zum Ausrichten bzw. Behandeln des flüssigen Zementes unter Oberflächenkontakt mit dem flüssigen Zement über den flüssigen Zement bewegt werden. Bspw. können die ein oder mehreren Schiebe- oder Abzugseinrichtungen über einen Handgriff oder Haltebereich verfügen, so dass sie händisch über den flüssigen Zement bewegt werden können. Auch automatisierte Einrichtungen sind zur Ausrichtung des Zementes vorstellbar.

Die Erfindung betrifft zudem einen Boden für Tierstallungen, umfassend eine Basisschicht, welche zumindest teilweise aus Zement gebildet ist. Zement kann vorliegend Bestandteil der Basisschicht sein. Vorstellbar ist bspw., dass die Basisschicht durch Beton und/oder Mörtel ausgebildet ist.

Merkmale, welche vorhergehend zum Verfahren genannt wurden, können ebenso bei diversen Ausführungsformen eines erfindungsgemäßen Bodens vorhanden sein. Weiter können Merkmale, welche zu diversen Ausführungsformen des Bodens genannt werden, bei diversen Ausführungsformen des erfindungsgemäßen Verfahrens vorhanden sein.

Der Boden für die Tierstallungen kann bspw. aus mehreren Fertigteilen bzw. Formatteilen gebildet sein, wobei die Fertigteile bzw. Formatteile gemeinsam und vorzugsweise unter Anlage den Tierstallboden ausbilden.

Die Basisschicht weist eine Strukturierung mit Fugen auf, in welche Fugen zumindest teilweise ein oder mehrere Formatteile aus verdichtetem organischem Material eingesetzt sind. Wie vorhergehend bereits erwähnt, können die Formatteile durch Kunstharzpressholz oder Pressholz ausgebildet sein, wie es bspw. unter dem Handelsnamen "Werzalit" bekannt ist. Bspw. können sich die Fugen nach unten verjüngen. Auch können die Fugen geschlossen ausgebildet sein und eine im Wesentlichen ebene und bodenseitige Kontaktfläche für das jeweilige in der Fuge angeordnete Formatteil sowie ggf. ebene seitliche Kontaktflächen für das jeweilige in der Fuge angeordnete Formatteil besitzen.

In einer bevorzugten Ausführungsform der vorliegenden Erfindung können die ein oder mehreren Formatteile formschlüssig in den Fugen aufgenommen sein. Die Gefahr eines Rutschens oder Lösens der ein oder mehreren Formatteile aus ihrer jeweiligen Fuge kann somit reduziert werden.

Auch kann es sein, dass die in die Fugen eingesetzten ein oder mehreren Formatteile eine netz- und/oder gitterartige Strukturierung im Boden ausbilden, welche sich vorzugsweise über die gesamte Basisschicht erstreckt.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt ein Flussdiagramm für eine Ausführungsform eines erfindungsgemäßen Verfahrens zur Herstellung von Böden für Tierstallungen;
Figur 2 zeigt eine schematische Ansicht von oben auf eine Ausführungsform eines Formatteils, wie es für das erfindungsgemäße Verfahren verwendet werden kann oder Bestandteil eines erfindungsgemäßen Bodens sein kann;
Figur 3 zeigt eine schematische Ansicht von oben auf zwei eingesetzte Formatteile in Zement;
Figur 4 zeigt eine schematische Ansicht von oben auf eine vollständig gebildete Strukturierung für einen Boden resultierend aus den in Figur 3 beschriebenen Schritten;
Figur 5 zeigt einen schematischen Querschnitt durch ein Ausführungsbeispiel eines erfindungsgemäßen Bodens für Tierstallungen entlang einer Schnittlinie A-A aus Figur 4;
Figur 6 zeigt eine schematische Ansicht von oben auf eine weitere Ausführungsform eines Bodens für Tierstallungen;
Figur 7 zeigt eine schematische Ansicht von oben auf eine weitere Ausführungsform eines Bodens für Tierstallungen;
Figuren 8a und 8b zeigen jeweils eine schematische Ansicht auf eine Ausführungsform einer Schiebe- oder Abzugseinrichtung, wie sie im Rahmen einer Ausführungsform der vorliegenden Erfindung zur Ausrichtung oder Behandlung von Zement im plastischen Zustand Verwendung finden können;

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

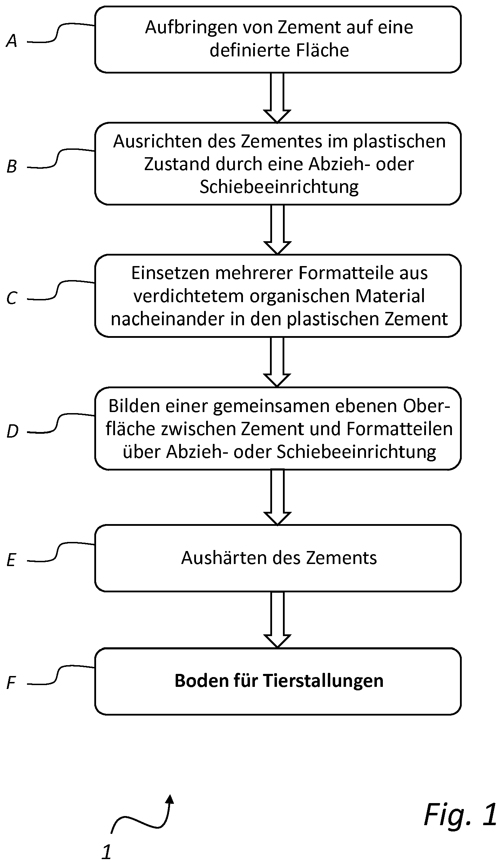

**Figur 1** zeigt ein Ablaufdiagramm für eine Ausführungsform eines erfindungsgemäßen Verfahrens 1 zur Herstellung von Böden 2 für Tierstallungen. Die einzelnen Komponenten zur Umsetzung des Verfahrens sind in Figur 1 nicht gezeigt, jedoch beispielhaft in den anschließenden Figuren erkennbar. In einem ersten Verfahrensschritt A wird Zement 4 bzw. eine Schicht aus Zement 4 auf eine definierte Fläche 6 aufgebracht. Durch die Erstreckung der definierten Fläche 6 ist die spätere Erstreckung des aus dem erfindungsgemäßen Verfahrens 1 resultierenden Bodens 2 für Tierstallungen festgesetzt. Auch kann der spätere Boden 2 sich lediglich anteilig über die definierte Fläche 6 erstrecken. Der Zement 4 wird zusammen mit weiteren Bestandteilen als Beton 7 auf die definierte Fläche 6 aufgebracht.

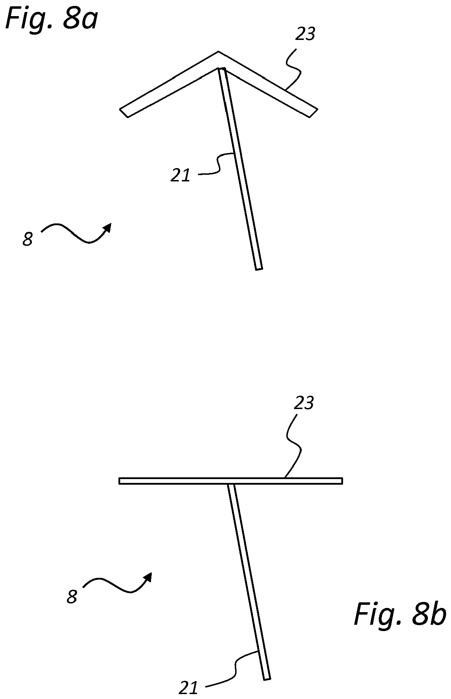

In einem zeitlich nachfolgenden Verfahrensschritt B wird der Zement 4 im plastischen Zustand durch eine Abzieh- oder Schiebeeinrichtung 8 (vgl. Figuren 8) ausgerichtet. Das Ausrichten durch die Abzieh- oder Schiebeeinrichtung 8 kann hierbei unmittelbar nachfolgend an das Aufbringen des Zementes 4 auf die definierte Fläche 6 erfolgen. Die Abzieh- oder Schiebeeinrichtung 8 wird dabei unter Oberflächenkontakt mit dem Zement 4 über den Zement 4 bewegt, solange bis der Zement 4 eine ebene Oberfläche ausgebildet hat. Die ebene Oberfläche ist hierbei horizontal orientiert.

Ist die ebene Fläche hergestellt, so werden im Verfahrensschritt C mehrere Formatteile 9 aus verdichtetem organischen Material nacheinander in den plastischen Zement 4 eingesetzt. Die Formatteile 9 werden derart in den Zement 4 eingesetzt, dass durchgehend mindestens zwei Formatteile 9 miteinander in Oberflächenkontakt treten bzw. aneinander anliegen.

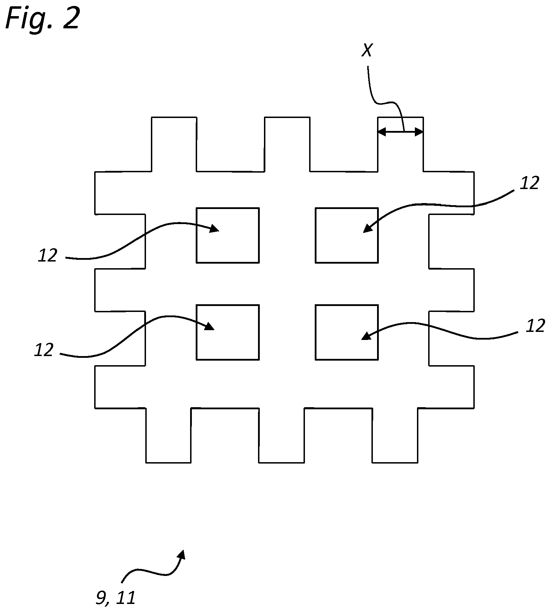

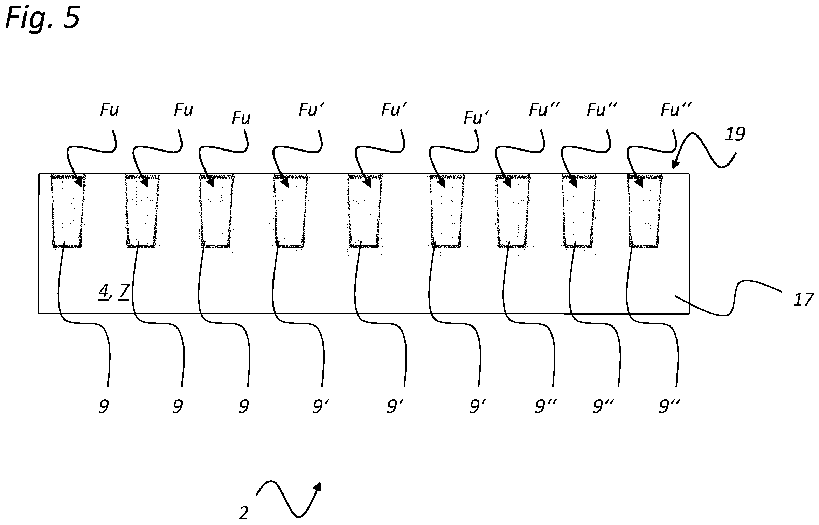

Da sich der Zement 4 bei Einsetzen der Formatteile 9 im plastischen Zustand befindet, wird der Zement 4 mittels der Formatteile 9 verformt, wobei Fugen Fu, Fu', Fu" (vgl. Figur 5) im Zement 4 gebildet werden. Der Zement 4 tritt hierbei in Öffnungen 12 (gezeigt in Figur 2) der Formatteile 9 ein. Der aus dem erfindungsgemäßen Verfahren 1 resultierende Boden 2 bildet somit eine Oberfläche 5 aus, welche anteilig durch organisches Material und anteilig durch Zement 4 gebildet ist. Das organische Material ist hierbei netz- bzw. gitterartig über die Oberfläche 5 bzw. über die Trittfläche der Nutztiere verteilt.

Anschließend erfolgt im Verfahrensschritt D das Bilden einer gemeinsamen ebenen Oberfläche 19 (vgl. Figur 5) zwischen Zement 4 und Formatteilen 9 über eine Abzieh- und Schiebeeinrichtung 8. Die Abzieh- und Schiebeeinrichtung 8 wird hierbei erneut unter Oberflächenkontakt mit dem Zement 4 und den Formatteilen 9 über den Zement 4 und die Formatteile 9 bewegt. Hierbei kann ggf. überschüssiger Zement 4 durch die Abzieh- und Schiebeeinrichtung 8 entfernt werden, welcher sich nicht in die aus dem Zement 4 und den Formatteilen 9 gemeinsam gebildete ebene Oberfläche 19 zwischen Zement 4 und Formatteilen 9 einfügt. Der Zement 4 bzw. Beton 7 befindet sich hierbei noch im plastischen Zustand.

Ist die gemeinsame ebene Oberfläche 19 zwischen Zement 4 und den Formatteilen 9 gebildet, so kann in einem weiteren Verfahrensschritt E das Aushärten des Zementes 4 bzw. des Betons 7 erfolgen. Das Aushärten kann beim erfindungsgemäßen Verfahren 1 vorzugsweise selbständig über eine gewisse Verweildauer und ohne weitere Beeinflussung des Zementes 4 oder der Formatteile 9 erfolgen.

Nach Verweildauer resultiert aus dem Zement 4 bzw. dem Beton 7 zusammen mit den Formatteilen 9 der Boden 2 für die Tierstallung (vgl. Bezugsziffer F). Die Formatteile 9 bleiben hierbei im Zement 4 bzw. im Beton 7 und werden nicht mehr entnommen. Durch die Oberfläche des Zementes 4 bzw. des Betons 7 und die Oberfläche der in den Zement 4 bzw. in den Beton 7 eingesetzten Formatteile 9 ist eine Aufstandsfläche für Tiere ausgebildet.

**Figur 2** zeigt eine schematische Ansicht von oben auf eine Ausführungsform eines Formatteils 9, wie es für das erfindungsgemäße Verfahren 1 verwendet werden kann oder Bestandteil eines erfindungsgemäßen Bodens 2 sein kann. Das Formatteil 9 ist vorliegend ausgebildet als Einlegeplatte 11 und besitzt eine gitterartige Struktur. Erkennbar ist weiter, dass das Formatteil 9 mehrere Öffnungen 12 besitzt, durch welche beim Einsetzen des Formatteils 9 in den Zement 4 der Zement 4 hindurchtreten kann. Die Dimensionierung der Öffnungen 12 ist in Figur 2 nur beispielhaft dargestellt, so dass in weiteren Ausführungsformen die Öffnungen 12 vergrößert oder stark vergrößert ausgebildet sein können. Bspw. kann es sein, dass die gitterartige Struktur der Formatteile 9 eine im Boden 2 erkennbare Breite X zwischen 30mm bis 100mm oder zwischen 8mm bis 25mm ausbildet.

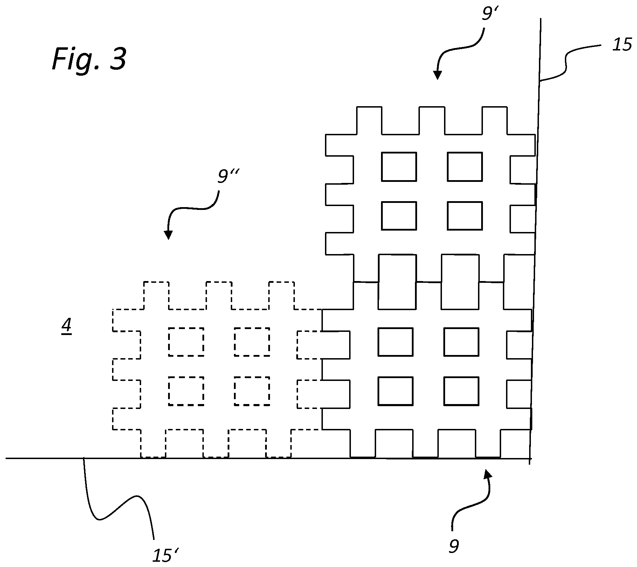

**Figur 3** zeigt eine schematische Ansicht von oben auf zwei eingesetzte Formatteile 9 und 9' in Zement 4. Weiter sind Begrenzungen 15 und 15' für die definierte Fläche 6 angedeutet. Der im Rahmen des Verfahrens 1 resultierende Boden 2 erstreckt sich somit bis zu den Begrenzungen 15 und 15'. Im Rahmen des Ausführungsbeispiels der Figur 3 wurde zunächst das erste Formatteil 9 in den Zement 4 eingesetzt und hierauf nachfolgend das zweite Formatteil 9'. Wie aus Figur 3 weiter erkennbar, wurden das erste Formatteil 9 und das zweite Formatteil 9' derart in den Zement 4 eingesetzt, dass sie sich berühren. Das erste Formatteil 9 und das zweite Formatteil 9' bilden somit eine gemeinsame und ununterbrochene Strukturierung aus.

Zudem ist ein drittes Formatteil 9" in Phantomlinien angedeutet, welches nachfolgend in den Zement 4 einzusetzen ist. Ebenso wäre die Position des dritten Formatteils 9" nach Einsetzen in den Zement 4 derart ausgebildet, dass es mit wenigstens einem Formatteil - vorliegend das erste Formatteil 9 - in Kontakt tritt. Nach Einsetzen des dritten Formatteils 9" in den Zement 4 bilden das erste Formatteil 9, das zweite Formatteil 9' und das dritte Formatteil 9" eine gemeinsame und ununterbrochene Strukturierung aus.

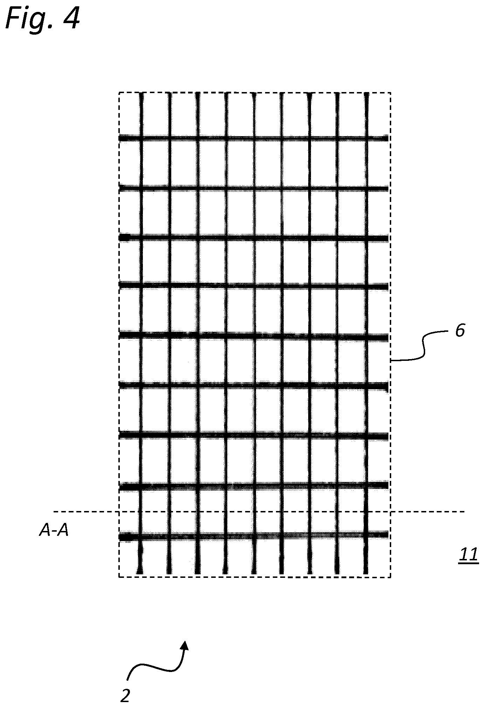

Sukzessive werden hierauf weitere Formatteile 9 in den Zement 4 eingesetzt, bis eine sich vollständig und ununterbrochen über eine definierte Fläche 6 erstreckende Strukturierung für einen Boden 2 gebildet ist (vgl. Figur 4).

**Figur 4** zeigt eine schematische Ansicht von oben auf eine vollständig gebildete Strukturierung für einen Boden 2 resultierend aus den in Figur 3 beschriebenen Schritten. Angedeutet ist in Phantomlinien und unter Verweis von Bezugsziffer 6 eine definierte Fläche, auf welche flüssiger Zement 4 vor Einsetzen der Formatteile 9 aufgebracht wird. Nach Einsetzen der Formatteile 9 und Aushärten des Zementes 4 ist der Boden 2 gebildet. Der Boden 2 erstreckt sich ebenso über die definierte Fläche 6. Die Formatteile 9 bleiben während des Aushärtens und nach dem Aushärten als erkennbarer Bestandteil - in Figur 4 als ununterbrochene Strukturierung - des Bodens 2 im Zement 4 bzw. im Beton 7.

**Figur 5** zeigt einen schematischen Querschnitt durch ein Ausführungsbeispiel eines erfindungsgemäßen Bodens 2 für Tierstallungen entlang einer Schnittlinie A-A aus Figur 4. Der Boden 2 ist gebildet aus einer Basisschicht 17 aus Zement 4 bzw. Beton 7 sowie mehreren Fugen Fu, Fu' und Fu", wobei sich über die Fugen Fu ein erstes Formatteil 9 formschlüssig erstreckt, über die Fugen Fu' ein zweites und weiteres Formatteil 9' formschlüssig erstreckt und über die Fugen Fu" ein weiteres und drittes Formatteil 9" formschlüssig erstreckt. Erkennbar ist zudem, dass die Fugen Fu, Fu' und Fu" eine sich nach unten verjüngende Formgebung aufweisen. Da die Formatteile 9, 9' sowie 9" jeweils formschlüssig in ihrer zugeordneten Fuge Fu, Fu' bzw. Fu" aufgenommen sind, haben die Formatteile 9, 9' sowie 9" ebenso auf ihrer dem Untergrund zugewandten Seite eine verjüngende Formgebung. Vorstellbar ist jedoch auch in weiteren Ausführungsformen, dass sich die Fugen Fu, Fu' und Fu" nach unten nicht verjüngen.

Bspw. kann es sein, dass sich die Formatteile 9, 9' und 9" jeweils zwischen 5 mm und 30mm in die Basisschicht 17 hinein erstrecken. Die Basisschicht 17 mit dem Zement 4 bzw. dem Beton 7 kann dementsprechend eine Schichtdicke von ca. 10 mm bis 50 mm oder auch mehr aufweisen, wobei die Stärke der Formatteile 9, 9' und 9" jeweils entsprechend geringer ist als die Schichtdicke der Zementschicht.

Weiter ist erkennbar, dass die Formatteile 9, 9' und 9" zusammen mit der Basisschicht 17 bzw. dem Zement 4 oder Beton 7 eine ebene Oberfläche 19 ausbilden, die vorliegend horizontal orientiert ist. Selbstverständlich kann die Basisschicht 17 wahlweise auch in definierten Abschnitten leicht geneigt verlaufen, was bei Laufgängen, Verbindungsabschnitten etc. im Stallbereich vorkommen und sinnvoll sein kann.

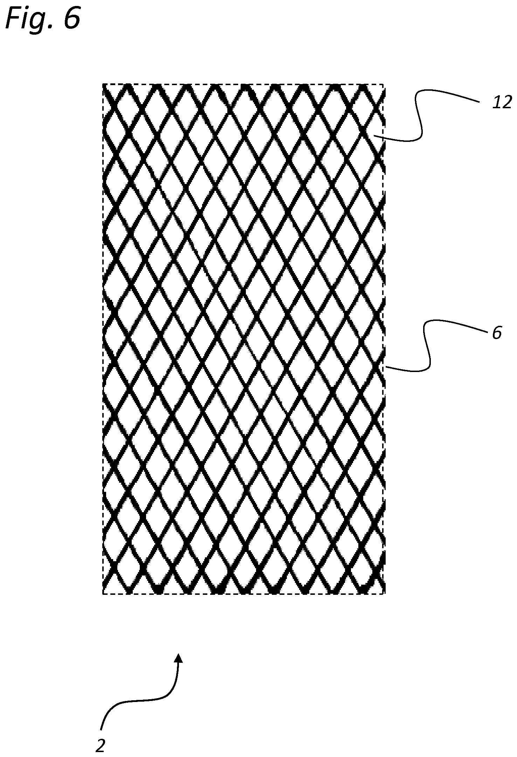

**Figur 6** zeigt eine schematische Ansicht von oben auf eine weitere Ausführungsform eines Bodens 2 für Tierstallungen. Wie in Figur 6 erkennbar, ist die Strukturierung im gezeigten Ausführungsbeispiel rautenförmig ausgebildet.

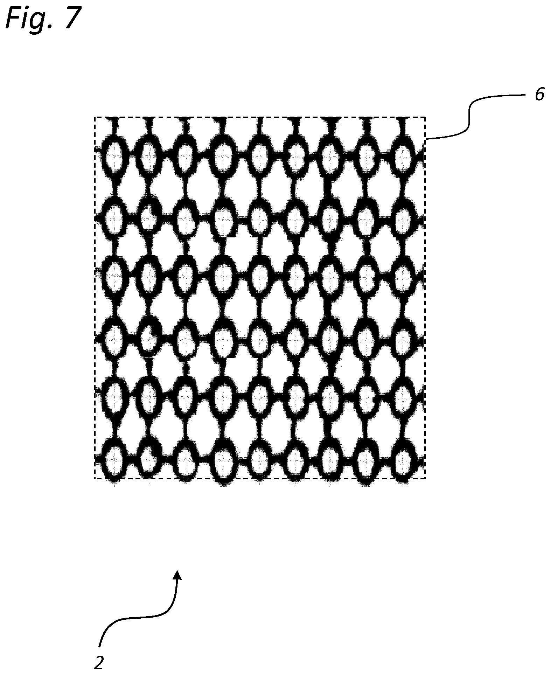

**Figur 7** zeigt eine schematische Ansicht von oben auf eine weitere Ausführungsform eines Bodens 2 für Tierstallungen. Erkennbar ist hierbei, dass die Strukturierung auch runde Formgebungen berücksichtigen kann. Zur Herstellung einer derartigen Strukturierung ist die Formgebung der Formatteile 9 jeweils anzupassen.

**Figuren 8a** und **8b** zeigen jeweils eine schematische Ansicht auf eine Ausführungsform einer Schiebe- oder Abzugseinrichtung 8, wie sie im Rahmen einer Ausführungsform der vorliegenden Erfindung zur Ausrichtung oder Behandlung von Zement 4 im plastischen Zustand Verwendung finden können.

Figur 8a zeigt hierbei eine Ausführungsform mit einem Handgriff 21 und einem Kontaktelement 23. Das Kontaktelement 23 weist im Ausführungsbeispiel der Figur 8a eine V-förmige Formgebung auf.

Figur 8b zeigt ebenso eine Ausführungsform mit einem Handgriff 21 und einem Kontaktelement 23. Das Kontaktelement 23 weist hierbei eine lineare Formgebung auf.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Verfahren
- 2: Boden
- 4: Zement
- 5: Oberseite
- 6: Definierte Fläche
- 7: Beton
- 8: Abzieh- oder Schiebeeinrichtung
- 9: Formatteil
- 11: Einlegeplatte
- 12: Öffnung
- 15: Begrenzung
- 17: Basisschicht
- 19: Oberfläche
- 21: Handgriff
- 23: Kontaktelement

- A-F: Verfahrensschritte
- Fu: Fuge
- X: Breite

## Patentansprüche

1. Verfahren (1) zur Herstellung von Böden (2) für Tierstallungen, das zumindest die folgenden Schritte in dieser Reihenfolge umfasst:
- Aufbringen einer Schicht aus flüssigem Zement (4) auf eine definierte Bodenfläche (6);
- nachfolgendes Einsetzen von einem Formatteil (9) oder mehreren Formatteilen (9, 9', 9") aus verdichtetem organischem Material in die Schicht aus Zement (4) während ihres plastischen Zustandes;
- Aushärten des Zementes (4) unter Verbleib des Formatteils (9) oder der mehreren Formatteile (9, 9', 9") während des Aushärtens und nach dem Aushärten als erkennbarer Bestandteil des Bodens (2) im Zement (4),
**dadurch gekennzeichnet, dass** durch das Einsetzen von einem Formatteil (9) oder mehreren Formatteilen (9, 9', 9") Fugen (Fu, Fu', Fu") im Zement (4) gebildet werden, in denen die ein oder mehreren Formatteile (9, 9', 9") angeordnet sind.

2. Verfahren nach Anspruch 1, bei dem der flüssige Zement (4) nach dem Aufbringen auf die definierte Fläche (6) und vor dem Einsetzen der ein oder mehreren Formatteile (9) in einem weiteren Verfahrensschritt derart ausgerichtet oder behandelt wird, dass er eine ebene Oberfläche ausbildet.

3. Verfahren nach Anspruch 1 oder 2, bei dem wenigstens zwei separate Formatteile (9, 9', 9") vorhanden sind bzw. verwendet werden, welche vorzugsweise nacheinander in den Zement (4) während seines plastischen Zustandes eingesetzt werden.

4. Verfahren nach Anspruch 3, bei dem die wenigstens zwei separaten Formatteile (9, 9', 9") jeweils eine gitter- und/oder netzartige Formgebung besitzen und derart benachbart in den Zement (4) eingesetzt werden, dass nach Einsetzen der wenigstens zwei separaten Formatteile (9, 9', 9") die wenigstens zwei separaten Formatteile (9, 9', 9") miteinander eine durchgehende Strukturierung im Zement (4) ausbilden.

5. Verfahren nach einem der Ansprüche 1 bis 4, bei dem die ein oder mehreren Formatteile (9, 9', 9") derart in den Zement (4) während seines plastischen Zustandes eingesetzt werden, dass sie sich nachfolgend zumindest weitgehend über die gesamte definierte Fläche (6) erstrecken.

6. Verfahren nach einem der Ansprüche 1 bis 5, bei dem die ein oder mehreren Formatteile (9, 9', 9") jeweils eine, vorzugsweise jedoch mehrere Öffnungen (12) ausbilden, durch welche nach Einsetzen der Formatteile (9, 9', 9") in den Zement (4) der Zement (4) ein- und/oder hindurchtritt.

7. Verfahren nach einem der Ansprüche 1 bis 6, bei dem nach Einsetzen der ein oder mehreren Formatteile (9, 9', 9") in den Zement (4) in einem weiteren Verfahrensschritt (D) der flüssige Zement (4) derart ausgerichtet oder behandelt wird, dass er zusammen mit den ein oder mehreren Formatteilen (9, 9', 9") eine zumindest weitgehend ebene Oberfläche (19) ausbildet.

8. Boden (2) für Tierstallungen, umfassend eine zumindest teilweise aus Zement (4) gebildete Basisschicht (17), die eine durch Fugen (Fu, Fu', Fu") gebildete Strukturierung aufweist, **dadurch gekennzeichnet, dass** zumindest in einigen der Fugen (Fu, Fu', Fu") oder in alle Fugen (Fu, Fu', Fu") ein oder mehrere Formatteile (9, 9', 9") aus verdichtetem organischem Material eingesetzt sind, wobei die ein oder mehreren Formatteile (9, 9', 9") jeweils eine oder mehrere Öffnungen (12) ausbilden, durch welche nach Einsetzen der Formatteile in den Zement (4) der Zement (4) ein- oder hindurchtritt.

9. Boden für Tierstallungen nach Anspruch 8, bei welchem die ein oder mehreren Formatteile (9, 9', 9") formschlüssig in den Fugen (Fu, Fu', Fu") aufgenommen sind.

10. Boden für Tierstallungen nach Anspruch 8 oder 9, bei dem das eingesetzte organische Material der Formatteile (9, 9', 9") aus Pressholz oder Kunstharzpressholz gebildet ist.

11. Boden für Tierstallungen nach Anspruch 8 oder 9, bei dem die in die Fugen (Fu, Fu', Fu") eingesetzten ein oder mehreren Formatteile (9, 9', 9") eine netzartige und/oder gitterartige Strukturierung im Boden (2) ausbilden.

12. Boden nach Anspruch 11, bei dem sich die netzartige oder gitterartige Strukturierung im Boden (2) weitgehend über die gesamte Basisschicht (17) erstreckt.

13. Boden nach einem oder mehreren der Ansprüche 8 bis 12, bei welchem sich eine oder mehrere der Fugen (Fu, Fu', Fu") nach unten verjüngen.

14. Boden nach einem oder mehreren der Ansprüche 8 bis 13, bei welchem die Formatteile (9, 9', 9") zusammen mit der zumindest teilweise aus Zement (4) gebildeten Basisschicht (17) eine zumindest weitgehend ebene Trittfläche ausbilden.

## Claims

1. A method (1) for producing floors (2) for animal stables, the method comprising at least the following steps in this order:
- application of a layer of liquid cement (4) onto a defined floor area (6);
- subsequent placing of one format part (9) or of a plurality of format parts (9, 9', 9") of compacted organic material into the layer of cement (4) while the layer is in its plastic state; and
- hardening of the cement (4), with the format part (9) or the plurality of format parts (9, 9', 9") remaining in the cement (4) during the hardening and after the hardening as a recognisable component of the floor (2);
**characterised in that** the placing of one format part (9) or of a plurality of format parts (9, 9', 9") results in forming grooves (Fu, Fu', Fu") in the cement (4), in which grooves (Fu, Fu', Fu") the one or more format parts (9, 9', 9") are disposed.

2. The method as recited in claim 1, with the liquid cement (4) being levelled or treated in a further method step, after the cement (4) has been applied onto the defined area (6) and prior to the one or more format parts (9) being placed into it, in such a manner that the cement (4) forms an even surface.

3. The method as recited in claim 1 or 2, with at least two separate format parts (9, 9', 9") being present or, as the case may be, being used, which are preferably placed successively into the cement (4) while it is in its plastic state.

4. The method as recited in claim 3, with the at least two separate format parts (9, 9', 9") each having a grid- and/or net-like design and being placed adjacently into the cement (4) in such a manner that the at least two separate format parts (9, 9', 9") together form a continuous structure in the cement (4) after having been placed into the cement (4).

5. The method as recited in one of the claims 1 to 4, with the one or more format parts (9, 9', 9") being placed into the cement (4) while it is in its plastic state such that they subsequently extend at least largely across the entire defined area (6).

6. The method as recited in one of the claims 1 to 5, with the one or more format parts (9, 9', 9") each forming one, preferably however, a plurality of apertures (12) through which the cement (4) enters and/or passes after the format parts (9, 9', 9") have been placed into the cement (4).

7. The method as recited in one of the claims 1 to 6, with the liquid cement (4) being levelled or treated in a further method step (D), after the one or more format parts (9, 9', 9") have been placed into the cement (4), in such a manner that the cement (4) together with the one or more format parts (9, 9', 9") forms an at least largely even surface (19).

8. A floor (2) for animal stables, the floor (4) comprising a base layer (17) at least partly formed of cement (4), with the base layer (17) having a structure formed by grooves (Fu, Fu', Fu"), **characterised in that** one or more format parts (9, 9', 9") of compacted organic material are placed into at least some of the grooves (Fu, Fu', Fu") or into all of the grooves (Fu, Fu', Fu"), wherein the one or more format parts (9, 9', 9") each form one or more apertures (12) through which the cement (4) enters and/or passes after the format parts (9, 9', 9") have been placed into the cement (4).

9. The floor for animal stables as recited in claim 8, with the one or more format parts (9, 9', 9") being form-lockingly accommodated in the grooves (Fu, Fu', Fu").

10. The floor for animal stables as recited in claim 8 or 9, with the organic material of the format parts (9, 9', 9") placed into it being formed of compressed wood or of synthetic resin compressed wood.

11. The floor for animal stables as recited in claim 8 or 9, with the one or more format parts (9, 9', 9") that are placed into the grooves (Fu, Fu', Fu") forming a net-like and/or grid-like structure in the floor (2).

12. The floor as recited in claim 11, with the net-like or grid-like structure in the floor (2) extending largely across the entire base layer (17).

13. The floor as recited in one or more of the claims 8 to 12, with one or more of the grooves (Fu, Fu', Fu") tapering downward.

14. The floor as recited in one or more of the claims 8 to 13, with the format parts (9, 9', 9") together with the base layer (17) that is at least partly formed of cement (4) forming an at least largely even tread.

## Revendications

1. Procédé (1) de fabrication de sols (2) pour étables qui comprend au moins les étapes suivantes dans cet ordre, consistant à:
- appliquer une couche de ciment (4) liquide sur une surface de sol (6) définie;
- insérer ensuite, dans la couche de ciment (4), pendant son état plastique, un élément de format (9) ou une pluralité d'éléments de format (9, 9', 9") en matière organique compactée,
- durcir le ciment (4) tout en laissant l'élément de format (9) ou la pluralité d'éléments de format (9, 9', 9"), en tant que composant identifiable du sol (2), dans le ciment (4) durant le durcissement et après le durcissement,
**caractérisé par le fait que**, dû à l'insertion d'un élément de format (9) ou d'une pluralité d'éléments de format (9, 9', 9"), des joints (Fu, Fu', Fu") sont formés dans le ciment (4) dans lesquels est/sont disposé(s) ledit un ou lesdits plusieurs élément(s) de format (9, 9', 9").

2. Procédé selon la revendication 1, dans lequel, dans une autre étape du procédé, le ciment (4) liquide, après avoir appliqué celui-ci sur la surface (6) définie et avant d'insérer ledit un ou lesdits plusieurs éléments de format (9), est aligné ou traité de telle sorte qu'il forme une surface plane.

3. Procédé selon la revendication 1 ou 2, dans lequel au moins deux éléments de format (9, 9', 9") séparés sont présents ou bien utilisés qui, de préférence, sont insérés l'un après l'autre dans le ciment (4) durant son état plastique.

4. Procédé selon la revendication 3, dans lequel lesdits au moins deux éléments de format (9, 9', 9") séparés présentent chacun une conformation de type treillis et/ou réseau et sont insérés de manière voisine dans le ciment (4) de telle sorte que, après avoir inséré lesdits au moins deux éléments de format (9, 9', 9") séparés, lesdits au moins deux éléments de format (9, 9', 9") séparés forment ensemble une structuration continue dans le ciment (4).

5. Procédé selon l'une quelconque des revendications 1 à 4, dans lequel ledit un ou lesdits plusieurs éléments de format (9, 9', 9") sont insérés dans le ciment (4), pendant son état plastique, de manière à s'étendre ensuite, au moins dans une large mesure, sur l'ensemble de la surface (6) définie.

6. Procédé selon l'une quelconque des revendications 1 à 5, dans lequel ledit un ou lesdits plusieurs éléments de format (9, 9', 9") forment chacun une, mais de préférence plusieurs ouvertures (12) à travers lesquelles entre et/ou passe le ciment (4) après avoir inséré les éléments de format (9, 9', 9") dans le ciment (4).

7. Procédé selon l'une quelconque des revendications 1 à 6, dans lequel, dans une autre étape du procédé, après avoir inséré ledit un ou lesdits plusieurs éléments de format (9, 9', 9") dans le ciment (4), le ciment (4) liquide est aligné ou traité de telle sorte qu'il forme conjointement avec ledit un ou lesdits plusieurs éléments de format (9, 9', 9") une surface (19) au moins dans une large mesure plane.

8. Sol (2) pour étables, comprenant une couche de base (17) qui est réalisée au moins en partie à partir de ciment (4) et qui présente une structuration formée par des joints (Fu, Fu', Fu"), **caractérisé par le fait qu'**un ou plusieurs éléments de format (9, 9', 9") en matière organique compactée sont insérés au moins dans certains des joints (Fu, Fu', Fu") ou dans tous les joints (Fu, Fu', Fu"), ledit un ou lesdits plusieurs éléments de format (9, 9', 9") formant chacun une ou plusieurs ouvertures (12) à travers lesquelles entre ou passe le ciment (4) après avoir inséré les éléments de format dans le ciment (4).

9. Sol pour étables selon la revendication 8, dans lequel ledit un ou lesdits plusieurs éléments de format (9, 9', 9") sont reçus à engagement positif dans les joints (Fu, Fu', Fu").

10. Sol pour étables selon la revendication 8 ou 9, dans lequel la matière organique utilisée des éléments de format (9, 9', 9") est constituée par du bois comprimé ou bois comprimé à résine synthétique.

11. Sol pour étables selon la revendication 8 ou 9, dans lequel ledit un ou lesdits plusieurs éléments de format (9, 9', 9") insérés dans les joints (Fu, Fu', Fu") forment une structuration de type réseau et/ou treillis dans le sol (2).

12. Sol selon la revendication 11, dans lequel la structuration de type réseau ou treillis dans le sol (2) s'étend dans une large mesure sur l'ensemble de la couche de base (17).

13. Sol selon l'une ou plusieurs des revendications 8 à 12, dans lequel un ou plusieurs des joints (Fu, Fu', Fu") se rétrécissent vers le bas.

14. Sol selon l'une ou plusieurs des revendications 8 à 13, dans lequel les éléments de format (9, 9', 9") forment conjointement avec la couche de base (17) réalisée au moins en partie à partir de ciment (4), une surface de marche au moins dans une large mesure plane.
